(19) Europäisches Patentamt
European Patent Office
Office européen des brevets

(11) **EP 2 355 037 A1**

(12) **EUROPEAN PATENT APPLICATION**

(43) Date of publication:
**10.08.2011 Bulletin 2011/32**

(51) Int Cl.:
***G06T 3/40*** *(2006.01)*     ***G06T 5/40*** *(2006.01)*

(21) Application number: **09290967.0**

(22) Date of filing: **18.12.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(71) Applicant: **NXP B.V.**<br>**5656 AG Eindhoven (NL)**<br><br>(72) Inventors:<br>• **Lépine, André**<br>  **14906 Caen (FR)** | • **Picard, Yann**<br>  **14906 Caen (FR)**<br><br>(74) Representative: **Williamson, Paul Lewis**<br>  **NXP Semiconductors UK Ltd.**<br>  **Intellectual Property Department**<br>  **Betchworth House**<br>  **57-65 Station Road**<br>  **Redhill**<br>  **Surrey RH1 1DL (GB)**<br><br>Remarks:<br>Amended claims in accordance with Rule 137(2) EPC. |

(54) **Method of and system for determining an average colour value for pixels**

(57)    A method of and system for determining a number of pixels out of a plurality of pixels, which plurality of pixels forms an image strip, each pixel of the plurality of pixels having a specific colour component value is provided. The method comprises: determining a value of a first colour component of each pixel of the plurality of pixels wherein the value corresponds to a first colour depth describable by a first number of bits, binning the plurality of pixels into a second number of bins of a first histogram, wherein the second number is lower than a maximum value represented by the first number of bits, determining the number of entries in each bin of the first histogram and determining for each bin of the first histogram an average colour value of a second colour component of the pixels binned into the respective bin.

Fig. 3

EP 2 355 037 A1

**Description**

**FIELD OF THE INVENTION**

The invention relates to a method of determining an average colour value of pixels, in particular, the invention relates to a method of matching two image strips, for example a colour balancing for views arranged in a circular way.
Beyond this, the invention relates to a system for determining an average colour value of pixels.

**BACKGROUND OF THE INVENTION**

Matching of two or more camera images is desired for many purposes. Due to different orientations of the cameras a simple link up of the images often does not fulfil requirements of an acceptable total image because the images may differ too much in colour and/or brightness.

**OBJECT AND SUMMARY OF THE INVENTION**

There may be a need for a method and/or a system capable of matching images in an efficient way.
The need defined above may be met by a method of determining an average colour value assigned to a number of pixels, a method of matching two image strips, and a system for determining an average colour value of pixels according to the independent claims. Further embodiments may be described in the dependent claims.
According to an exemplary aspect, a method of determining an average colour value assigned to a number of pixels out of a plurality of pixels, which plurality of pixels forms an image strip, each pixel of the plurality of pixels having a specific colour component value, is provided, wherein the method comprises determining a value of a first colour component of each pixel of the plurality of pixels wherein the value corresponds to a first colour depth describable by a first number of bits and binning the plurality of pixels into a second number of bins of a first histogram, wherein the second number is lower than a maximum value represented by the first number of bits. Furthermore, the method may comprise determining the number of entries in each bin of the first histogram and determining for each bin of the first histogram an average colour value of a second colour component of the pixels tinned into the respective bin.
According to an exemplary aspect a method of matching two image strips is provided, wherein the method comprises performing a method according to an exemplary aspect for the first image strip, performing a method according to an exemplary aspect for the second image strip, and determining a first number of accordance pairs of spatial subdivisions of the first image strip and the second image strip, wherein an accordance pair of spatial subdivision is defined by that the spatial subdivision of the first strip and the corresponding spatial subdivision of the second image strip is a valid spatial subdivision, and determining a second number of difference pairs of spatial subdivisions of the first image strip and the second image strip, whereon a difference pair of a spatial subdivision is defined by that exactly one of the spatial subdivision of the first strip and the corresponding spatial subdivision of the second image strip is a valid spatial subdivision.
In particular, a spatial subdivision may be a valid spatial subdivision in case a number of pixels of the respective spatial subdivision having a colour corresponding to the colour value represented by the peak bin exceeds a predetermined threshold.
According to still another exemplary aspect, a system for determining a number of pixels out of a plurality of pixels, which plurality of pixels forms an image strip, each pixel of the plurality of pixels having a specific colour component value, wherein the system comprises an image chip device adapted to determine a value of a first colour component of each pixel of the plurality of pixels wherein the value corresponds to a first colour depth describable by a first number of bits, a storage device adapted to binning the plurality of pixels into a second number of bins of a first histogram, wherein the second number is lower than a maximum value represented by the first number of bits, and a processor device adapted to determine the number of entries in each bin of the first histogram and the processor device being adapted to determine for each bin of the first histogram an average colour value of a second colour component of the pixels binned into the respective bin.
The term "average" may particularly denote a single value that summarizes or represents the general significance of a set of unequal values. The term "average" or "average value" may in particular be termed in statistics as a mean or mean value.
The term "value" may particularly denote a numerical quantity that is assigned or is determined by calculation or measurement.
The term "colour" may particularly denote the aspect of any object that may be described in terms of hue, lightness, and/or saturation. In physics, colour is associated specifically with electromagnetic radiation of a certain range of wavelengths visible to the human eye. Radiation of such wavelengths comprises that portion of the electromagnetic spectrum known as the visible spectrum-i.e., light.

The term "colour value" may thus particularly denote a numerical quantity describing or characterizing a visible object in terms of hue, lightness, and/or saturation.

The term "pixel" may particularly be an abbreviation of "picture element.". In particular the term "pixel" may denote any of the detecting elements of a charge-coupled device used as an optical sensor. Furthermore, the term "pixel" may particularly denote any of small discrete elements that together constitute an image. The image may be seen e.g. on a television or computer screen because a plurality of pixels arranged in an array may form a variable, visible section of the television or computer screen.

The term "colour value of a pixel" may thus particularly denote a numerical quantity assigned to a picture element.

The term "strip" may particularly denote a relatively long narrow piece or section, e.g. a band. The term "a plurality of pixels forms an image strip" may thus particularly denote a relatively long and narrow section of picture elements, i.e. an array having a greater length than its width, e.g. a rectangle.

The term "colour component." may particularly denote a colour element of a colour system or a colour constituent of a colour code. Due to the physical laws of optics and the physiological nature of perception a plurality of colours may be formed and depicted by additive or subtractive synthesis of three components of a colour system. One colour system may be formed from different colours, e.g. R (red), G (green) and B (blue). Another colour system may be formed from Y (yellow), C (cyan) and M (magenta). Three colour components may be assigned to one pixel.

A colour can be precisely specified by its hue, saturation, and brightness—three attributes sufficient to distinguish it from all other possible perceived colours. The hue is that aspect of colour usually associated with terms such as red, orange, yellow, and so forth Saturation (also known as chroma, or tone) refers to relative purity. When a pure, vivid, strong shade of red is mixed with a variable amount of white, weaker or paler reds are produced, each having the same hue but a different saturation. These paler colours arc called unsaturated colours. Finally, light of any given combination of hue and saturation can have a variable brightness (also called intensity, or value), which depends on the total amount of light energy present.

The term "determine" may particularly denote to find out or to measure a property of an object.

The term "bin" may particularly denote a class and the term "burning" may particularly denote a classification of values. E.g. values may be binned by being classified in a class when lying in a specific interval, In the context of histogram the term "bin" may thus denote an interval of parameter values which are sorted or binned in one class.

The term "colour depth" may particularly denote that values of colour components may be quantized by a binary method. Thus, e.g. a 24-bit colour depth for the R, G, B colour system may assign a value between 0 and 255 (8 bit) for each colour component (R, G and B). There is the maximum number of possible values for each colour component given by the number of the used bits. This results in a number of $256^3$,-16.777.216 colours that can be represented by the 24-bit colour depth since each of the colour components may be describable using 8 bits or 256 different colour components values. A pixel may be formed by corresponding subpixels of each colour component.

The term "histogram" may particularly denote a representation of a frequency distribution of measured values. A histogram may represent class intervals or bins, wherein a number of entries in bins may be identical to the corresponding frequencies being determined for the respective bin.

The term "entry" may particularly denote a record or notation of an occurrence in a set. The number of entries in a. histogram or bins of a histogram may lye summed up. In the scope of this application each entry in a bin may relate to a pixel.

The term "match" may particularly denote to set something in companion to something else or to compare something with something else.

The term "spatial subdivisions" may particularly denote something that is classified or sectioned in space.

The term "valid spatial subdivision" may particularly denote a relevant section.

The term "accordance pair" may particularly denote that for a first strip a valid spatial subdivision is given and for a. second strip the corresponding spatial subdivision is also a valid.

The term "difference pair" may particularly denote that exactly one respective subdivision of the first strip and of the second strip is valid.

According to a gist of an exemplary aspect described above a method may be provided by which an average colour value may be determined. For a plurality of pixels forming an image strip, assigned colour values of a first colour component may be determined. A colour depth for determining the colour value of the first colour component may be describable by a first number of bits. The first number of bits may represent possible colour values for the first colour component. Then, the number of possible values may be reduced. I.e. the colour values may be classified regarding to a colour depth corresponding to a second number of bits, wherein the second number of bits is lower than the first number of bits. In other words the pixels are classified according to a coarser classification. According to this coarse classification each class or bin contains a number of pixels. Each pixel may be allocated to a class or bin according to the second classification. For each class containing a variety of pixels the values of a corresponding second colour component are averaged. Each average colour value of the second colour component may be formed by taking the variety of pixels of the respective classes or bins which contain the pixels sorted according to the coarse classification of the first colour component values. The average of the second colour component values may result in averaging the second colour component values at pixel positions defined by the position of the pixels in the coarse classes of the first colour components. In other words, the first histogram may be associated with the first colour component while the second plurality of bins may be associated with the second colour component. Furthermore, it should be mentioned that the second plurality of bins may form a pseudo histogram, wherein each bin of the pseudo histogram may correlate or may be associated with one bin of the first histogram. That is, each bin of the first histogram may have an associated bin of the second plurality of bins.

A method of matching two image strips may take advantage of the average colour values of the second colour component and of the rebinned first colour component pixels. A class or bin which has turned out of being the most advantageous one or predominant one is taken to compare two adjacent image strips. This bin may be called peak bin while representing a colour value neighbourhood for the colour value of the first and of the second component. To compare the strips they may be divided into spatial subdivisions along the length of the strips so that spatial subdivision pairs may be prepared. The spatial subdivision pairs may be represented by the regarding sections or subdivisions of the first strip and the second strip. For each section of each strip a relevance analysis may be performed. The considered section of the strip may be classified to be relevant if for each colour component of the peak bin the number of entries exceeds a certain threshold. The threshold may also depend upon a position of the spatial subdivision on the strip in order to weight one or more spatial subdivisions. The respective subdivisions or sections where both strips are relevant may be called accordance pairs. The respective subdivisions or sections where only one strips is relevant may be called difference pairs. The number of accordance pairs and difference pairs may be used for comparison of the two strips.

In particular, one of the two image strips maybe a part or portion of a first image or view while the other of the two image strips may he a part of a second image or view, e.g. an adjoining view possibly having some overlap with the first image or possibly having no overlap with the first image. For example, the first image strip may correspond to a right portion or may include the right edge of the first image, while the second image strip may include a left portion or left edge of the second view, so that the first image strip and the second image strip are facing each other. In other words, the two strips may correspond to boundary areas of the two image strips. For example, the method according to an exemplary aspect may be used as a starting point for a process or method of colour balancing for views arranged in a circular way. Such views may relate to views in a so-called Birdview system for a car, e.g. a front, a back, a right, and a left image, which are taken to generate a single image or view showing a car from above. For generating such a Birdview image a method for determining an average colour value may be helpful in order to generate a smooth transition area between the different primary views. However, the method of determining average colour values may also be used for other processes.

In the following, further exemplary embodiments of the method of determining an average colour value of a number of pixels will be described. However, these embodiments also apply to the method of matching two image strips and to the system for determining an average colour value of pixels.

According to an exemplary embodiment the method further comprises defining an associated neighbourhood for each average colour value wherein each associated neighbourhood may define one associated bin of a second plurality of bins, and determining for each associated bin of the second plurality of bins the number of pixels having a value of the second colour component lying in the respective associated bin.

The term "neighbourhood" may particularly denote a set of all points belonging to a given set whose distances from a given point are less than a given positive number. In particular, the neighbourhood may represent an interval around a value.

The average colour value may have a neighbourhood in the pure mathematical meaning. Each. entry of a bin relates to a pixel of the bin and each pixel relates to its colour value. For a specific average colour value and a given neighbourhood a number of pixels or entries may be determined. At this point no statement about the spatial positions of the pixels in an image or in a strip of an image, wherein the pixels have the average colour values associated with, is made. Only a respective pseudo histogram, for the average colour value based on the first histogram may be determined.

According to an exemplary embodiment the method further comprises determining one peak bin representing a colour value, by selecting the bin of the first histogram and of the respective associated bin of the second plurality of bins which has a higher number of entries than a given threshold.

In particular, the peak bin may represent the bin of the first histogram and the associated second plurality of bins both having a number of entries which exceed a common or single threshold. The respective peak bin may be selected by determining the bin of the first histogram and the bin of the second plurality of bins which exceed both the threshold when stepwise lowering the value of the threshold representing a number of entries. In case two bins of the first histogram and two associated bins of the second plurality of bins exceed the same threshold an arbitrarily selection may be made which of the bin of the first histogram is defined as the peak bin. For example such a selection may be made based on the corresponding average spatial position of the pixels binned into the respective bin of the first histogram. In particular, the peak bin may describe or correspond to a specific colour value, e.g. a combination of two or even three colour components values.

According to an exemplary embodiment the method further comprises dividing the image strip into a plurality of spatial subdivisions wherein each pixel of the image strip is sorted into one of the plurality of spatial subdivisions depending on its distance to one end of the image strip, defining each of the spatial subdivisions to be a valid spatial subdivision in case the number of pixels of the respective spatial subdivision having a colour corresponding to the colour value represented by the peak bin exceeds a predetermined threshold, and defining each of the spatial subdivisions to be a non-valid spatial subdivision in case the number of pixels of the respective spatial subdivision having a colour corresponding to the colour value represented by the peak bin does not exceed the predetermined threshold.

In particular, each spatial subdivision may be formed by the pixels of the image strip having a distance from one end of the strip lying in a given interval, e.g. a first subdivision may be formed by the pixels having a distance between 0 and A pixels from the lower end of the pixel strip, while a second subdivision may be formed by the pixels of the image strip having a distance from the lower end lying in the interval between A and B pixels, etc.

In the following, further exemplary embodiments of the method of matching two image strips will be described. However, these embodiments also apply to the method of determining an average colour value of a number of pixels and to the system for determining an average colour value of pixels.

According to an exemplary embodiment the method further comprises determining whether the first number of accordance pairs is above a first predetermined threshold and whether the second number of difference pairs is below or equals a second predetermined threshold, and in case both of the above determining steps are fulfilled allocate the value TRUE to a continuity parameter.

In particular, the first predetermined threshold may be given by a number defining requirements for a minimal congruence or parity and/or the second predetermined threshold may be given by a number defining the maximum disparity or inequality. If the answer to the query is TRUE an appropriate peak bin may have been found.

In case the continuity parameter is not set to TRUE, i.e. the above mentioned conditions are not fulfilled, a new peak bin determining step may be performed. For the new peak bin determining step each already failed peak bins may be excluded from the search or maybe considered again.

According to an exemplary embodiment the method further comprises determining whether the first number of accordance pairs is below or equals a third predetermined threshold and whether the second number of difference pairs is above or equals a fourth predetermined threshold, and in case of that at least one of the above determining steps is fulfilled allocate the value TRUE to a sampling discontinuity parameter.

In particular the method may further comprise determining whether the first number of accordance pairs is below or equals a fifth predetermined threshold, and in case that the above determining steps are fulfilled allocate the value TRUE to a sampling discontinuity parameter.

In particular, the third predetermined threshold may be the same or a different one than the first threshold parameter and the fourth predetermined threshold may be the same or a different one than the second threshold parameter. For example, the fourth predetermined value may be zero or may be infinite, In this context the value infinite may particularly denote a value which is higher than the possible number of difference pairs, i.e. leading to the fact that the respective condition is never fulfilled.

The discontinuity query and the respective discontinuity parameter may determine the degree of disparity or inequality for two strips. Thus, the third threshold may define a maximum congruence or parity for two strips for fulfilling the discontinuity condition and the fourth threshold may define a minimum disparity or inequality for the two strips for fulfilling the discontinuity condition.

According to an exemplary embodiment the method further comprises determining a mean colour value for one of the two colour components of the first image strip by determining an average colour value of the peak bin for the respective colour component, and determining the mean colour value of the pixels having a colour value of the respective colour component which lie within a colour deviation zone around the determined average colour value while applying a second colour depth to the colour values, which second colour depth is describable by a number of bits being higher than the number of bits for describing the average colour value.

In particular, one mean colour value may be determined for each colour component and for each of the image strips of each view. Furthermore, the second colour depth may be equal to the first colour depth. In particular, the colour deviation zone may form an interval of colour values having the average colour value as its mean or at least as its middle point. As already mentioned the colour depth may characterize the degree of quantization of colour values for a specific colour component. The higher the colour depth denoted in bits is the higher is the number of colours which may be representable. The average colour value may correlate to the peak bin. In order to get the mean colour value by higher accuracy the average colour may be transformed into a colour depth of a higher number of bits. A deviation zone or a neighbourhood around this transformed average colour value also given by the higher colour depth may characterize a number of pixels. Depending on the frequency distribution of the colour values of these numbers of pixels an average for the corresponding colour values called mean colour value may deviate from the previously transformed average colour value. The mean colour value may be an accurate measure for the most frequent colour values of a strip.

According to an exemplary embodiment the method further comprises determining a further mean colour value for the one of the two colour components for the second image strip, and calculating an *Edge Shift* $^X_k$, wherein *Edge Shift* $^X_k$ is calculated by subtracting the mean colour value of a first image strip from the mean colour value of the second image strip.

In particular, *k may* denote a specific view or image while X may denote a specific colour component. In particular, the second image strip may correspond to a left strip of an edge of a view or image, while the first image strip may correspond to a right strip for the same edge of the same view. It should be noted that the parameter *Edge Shift* $^X_k$ may be calculated for all colour components X, e.g. for two or three colour components, which may be given by red, green and blue, and for all views *k,* e.g. for four views relating to front, back, left and right views four *Edge Shift* $^X_k$. *Edge Shift* $^X_k$ may be a measure for a colour shift for the two compared strips. The higher the value of *Edge Shift* $^X_k$ is the higher maybe a discrepancy between the most frequent colour values on both sides of an edge, i.e. for the first strip and for the second strip. In order to find appropriate values for colour shifting these values may be found out in the way described below.

In particular, each strip may correspond to a portion of a respective view, e.g. a right edge portion or a left edge portion, of a plurality of views, wherein the plurality of views may form a circular arrangement. The term "circular arrangement" may in particular denote that views or images may be taken by cameras which point in different directions and the images may form a panorama or round view if being arranged to one another in a proper way. In particular, a left portion of a first image or view may correspond to a first pointing direction of a camera while the right portion of a last image in a row of images or views building the circular arrangement may correspond to the same or nearly the same pointing direction. For example, for a car a birdview may be generated by four cameras taking four views. A front view, a right view, a back view and a left view in this order may be arranged clock-wise to generate a round view or a birdview of the car which is being calculated.

According to an exemplary embodiment the method further comprises

a) determining the value of an overall colour discontinuity parameter, wherein the overall colour discontinuity parameter is allocated the value TRUE in case:
when, for a number of NumView views

$$\sum_{X=R,G,B}\left|\sum_{k=0}^{NumView-1}EdgeShift^X_k\right| > BirdviewDiscontinuityThreshold$$

for a predetermined BirdviewDiscontinuityThreshold
b) determining, when the overall colour discontinuity parameter is allocated the value TRUE, the value of a local colour discontinuity parameter, wherein for each view *k* of a number of NumView view the value of local colour discontinuity parameter is allocated the value TRUE in case:

$$\sum_{X=R,G,B}\left|EdgeShift^X_k\right| > EdgeDiscontinuityThreshold$$

for a predetermined EdgeDiscontinuityThreshold,
and/or
c) performing a discontinuity redistribution,
wherein the discontinuity redistribution is, for each coloutcomponent X, given by:

$$i)\ EdgeShift'^X_k = -\sum_{i=0,i\neq k}^{NumEdges-1}EdgeShift^X_k ,$$

in case for exactly one edge *k* the sampling discontinuity parameter is TRUE and/or the local colour discontinuity parameter is TRUE,

$$ii) \quad EdgeShift'^{X}_{k} = EdgeShift^{X}_{k} - \frac{\left|EdgeShift^{X}_{k}\right| \cdot \sum_{i=0}^{NumEdges-1} EdgeShift^{X}_{k}}{\sum_{i=0}^{NumEdges-1}\left|EdgeShift^{X}_{k}\right|}$$

in case for more than one edge $k$ the sampling discontinuity parameter is TRUE and/or the local colour discontinuity parameter is TRUE,

$$iii) \quad EdgeShift'^{X}_{k} = -\sum_{i=0,i\neq k}^{NumEdges-1} EdgeShift^{X}_{k}$$

in case for no edge the colour discontinuity parameter is TRUE, redistribution being applied to one single edge $k$.

In particular, the selection of the one single edge k may be implementation dependent. For example, in case no edge shows a colour discontinuity, i.e. has a colour discontinuity parameter TRUE, e.g. corresponding to case iii) above, $k$ may be chosen in the redistribution such that a sum of the number of right strips and the number of left strips having both a valid sampling value for the same subdivisions is minimal for a view k.

The BirdviewDiscontinuityThreshold may characterize an empirical threshold for an overall continuity. If a summation of an absolute value of $Edge\ Shift^{X}_{k}$ for all edges and each colour component docs not exceed BirdviewDiscontinuityThreshold an overall continuity may be given. If the respective sum is higher than the BirdviewDiscontinuityThreshold an overall discontinuity may be proofed.

The EdgeDiscontinuityThreshold may characterize an empirical threshold for edge continuity. If a summation of an absolute value of $Edge\ Shift^{X}_{k}$ for each colour component of an edge does not exceed EdgeDiscontinuityThreshold then edge continuity may be given. If the respective sum is higher than the EdgeDiscontinuityThreshold an edge discontinuity may be proofed.

The above mentioned discontinuity redistribution under ii) may be the formula being applied in the upmost cases. However, the formula under i) and iii), respectively, may be advantageous in the given specific cases.

According to an exemplary embodiment the method further comprises determining $Edge\ Shift^{X}_{k}$ as $Edge\ Shift'^{X}_{k}$, determining $Shift^{X}_{k}$ as $Avg\ Edge\ Shift^{X}_{k}$ wherein

$$AvgEdgeShift^{X}_{k} \text{ is given by } AvgEdgeShift^{X}_{k} = \frac{\left(EdgeShift^{X}_{k} - EdgeShift^{X}_{(k-1)}\right)}{2}$$

for each colour component $X$ and/or for each edge $k$.

In particular, the calculated values for $Shift^{X}_{k}$ may be clipped within a predetermined limit, which may be chosen according to the specific application. The calculation or determining of the $Shift^{X}_{k}$ for different edges $k$ may be performed depending on the edge shift variance $EdgeShiftVar^{X}_{k}$ which may be determined according to

$$EdgeShiftVar^{X}_{k} = \frac{\displaystyle\sum_{X=R,G,B} \frac{\left(EdgeShift^{X}_{k} + EdgeShift^{X}_{(k-1)}\right)^{2}}{4}}{3} \text{, e.g.}$$

may be performed in a decreasing order of the $EdgeShiftVar^{X}_{k}$ parameter.

The $Shift^{X}_{k}$ may particularly be calculated according to a method or subroutine which may be described by the following pseudo code:

determining a sequence of the $EdgeShiftVar^{X}_{k}$ values of each view by sorting the same according to a decreasing order,
performing a loop for the views by decreasing $EdgeShiftVar^X_k$

- compute $AvgEdgeShift^X_k$ for each $X$ of R, G, B
- assigning $AvgEdgeShift^X_k$ to $Shift^X_k$ for each $X$ of R, G, B
- clipping or truncating the value of $Shift^X_k$ within a given range, which may be application dependent
- determining $EdgeShift^X_k$ according to
$EdgeShift^X_k = EdgeShift^X_k - Shift^X_k$ and
$EdgeShift^X_{(k-1)\% Numview} = EdgeShift^X_{(k-1)\% Numview} + Shift^X_k$

Thus, $Shift^X_k$ may be determined from $AvgEdgeShift^X_k$ for each colour component $X$ and each view $k$.

According to an exemplary embodiment the method further comprises redetermining $Shift^X_k$ as $AvgShift^X_k$ wherein $AvgShift^X_k$ is given by

$$AvgShift^X_k(t) = \frac{((DiscontFilterWindowSize - 1) \cdot AvgShift^X_k(t-1)) + Shift^X_k(t)}{DiscontFilterWindowSize},$$

for each colour component $X$ and/or for each edge $k$, wherein
$DiscontFilterWindowSize$ is a number of temporal references included in a sliding window.

In particular, the formula may be applied if a respective edge shows a discontinuity.

In particular, a window may be represented by a plurality of pixels, e.g. a portion of an image or view, i.e. a spatial array of pixels of an image or view. A "sliding window" may particularly denote a window which is moveable over time, e.g. due to the moving of the car the image is taken from. That is, by using the above mentioned formula a temporal filtering may be enabled wherein the average shifts relating to former views may be taken into account. In particular, the new average shift at time instant $t$ may be calculated by taking into account the former average shift at the time instant $(t-1)$. The number of temporal references used in the sliding window $DiscontFilterWindowSize$ may be arbitrarily chosen depending on the desired temporal filtering.

According to an exemplary embodiment the method further comprises: calculating $Shift^X_k$ from $AvgShift^X_k$, $MeanShift^X$ and $AvgMeanShift^X(t)$ by

$$Shift^X_k = AvgShift^X_k - (MeanShift^X - AvgMeanShift^X(t)),$$

wherein $MeanShift^X = \frac{1}{NumView} \sum_{View} Shift^X_k$ , for each colour component $X$

and

$$AvgMeanShift^X(t) = \frac{((OverallFilterWindowSize - 1) \cdot AvgMeanShift^X(t-1)) + MeanShift^X}{OverallFilterWindowSize},$$

for each colour component and wherein OveralFilterWindowSize is a total size of the filter window.

In case single effects turn out to be relevant for all views the value for $Shift^X_k$ may be determined. Accordingly the formula may avoid unwanted skips evocated for example by flashes, reflections etc.

According to an exemplary embodiment the method further comprises: calculating for each Pixel

$$X'(Pix^X_k) = X(Pix^X_k) + Shift^X_k$$

for each colour component $X$ and/or for each edge k.

In particular, $X'(Pix^X_k)$ may be clipped within a predetermined limit, which may be chosen according to the specific application. The predetermined limit may in particular limit the colour values to the maximum value and minimum value represented by the colour depth, e.g. to 0 or 255 for each colour component in case of an 8 bit colour depth per colour component.

It has to be noted that embodiments of the invention have been described with reference to different subject matters. In particular, some embodiments have been described with reference to method type claims, whereas other embodiments have been described with reference to apparatus type claims. However, a person skilled in the art will gather from the above and the following description that, unless otherwise notified, in addition to any combination of features belonging to one type of subject matter also any combination between features relating to different subject matters, in particular between features of the method type claims, and features of the apparatus type claims, is considered as to be disclosed with this document.

The aspects defined above and further aspects of the invention are apparent from the examples of embodiment to be described hereinafter and are explained with reference to these examples of embodiment

The invention will be described in more detail hereinafter with reference to examples of embodiment but to which the invention is not limited.

BRIEF DESCRIPTION OF THE DRAWINGS

Figure 1 shows a schematic depiction of two overlapping views for three cases.

Figure 2 shows a schematic depiction of two partially overlapping views.

Figure 3 shows a schematic depiction for a four-camera set-up on a car.

Figure 4 shows a schematic depiction for a strip divided into spatial subdivisions.

DETAILED DESCRIPTION OF EXEMPLARY EMBODIMENTS

The illustration in the drawing is schematically.

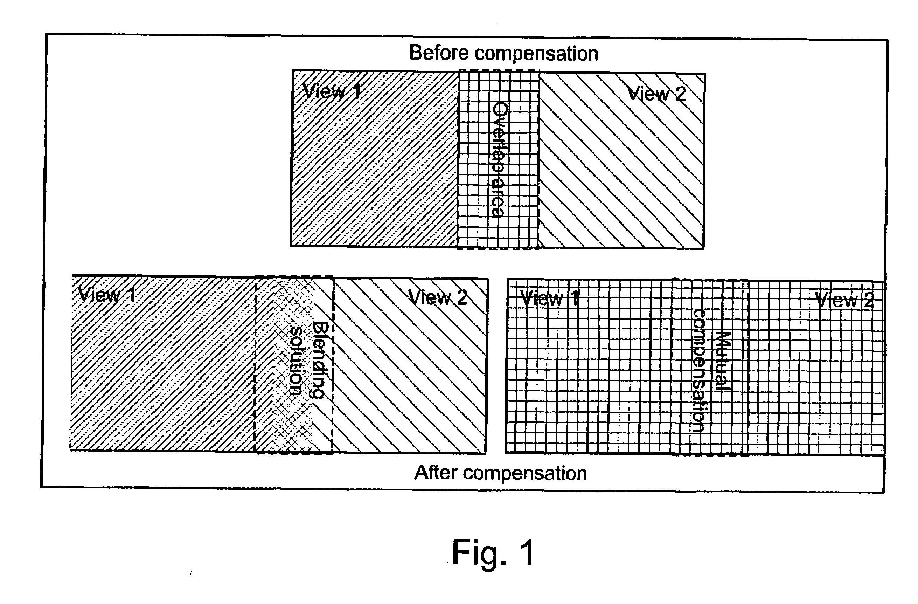

Figure 1 shows a schematic depiction of two overlapping views for three cases. For all three cases it is premised that view 1 is relatively dark and view 2 shows relative high brightness. In case before compensation, which means no compensation is done, an overlap area between the view 1 and the view 2 is distinct from both views. Therefore, the total view in this case appeals to be not natural.

In a second case a blending solution is applied. The blending process may be described by a formula implying a potentially pixel dependent blending coefficient $\alpha_{Pixel}$:

$$Val_{Color}^{Overlap} = (1 - \alpha) \cdot Val_{Color}^{1} + \alpha_{Pixel} \cdot Val_{Color}^{2}$$

Due to that blending is a local process an acceptable transition is visible in the overlap or transition area. However, the total view seems not to be acceptable as the overall impression is that two distinct single pictures have two differing luminance levels.

In a third case mutual compensation is applied. This is a global process due to the fact that each pixel undergoes the same affine transformation:

$$Val_{Color}^{Comp} = Gain_{Color} \cdot Val_{Color} + Shift_{Color}.$$

An offset $Shift_{Color}$ and a gain $Gain_{Color}$ are applied to each component $Val_{Color}$ of each pixel. The gain $Gain_{Color}$ may be specific to a colour component. In this case the result may be an adjustment of the two views. However, this process is an a posteriori process for the correction of the exposure parameters of the cameras.

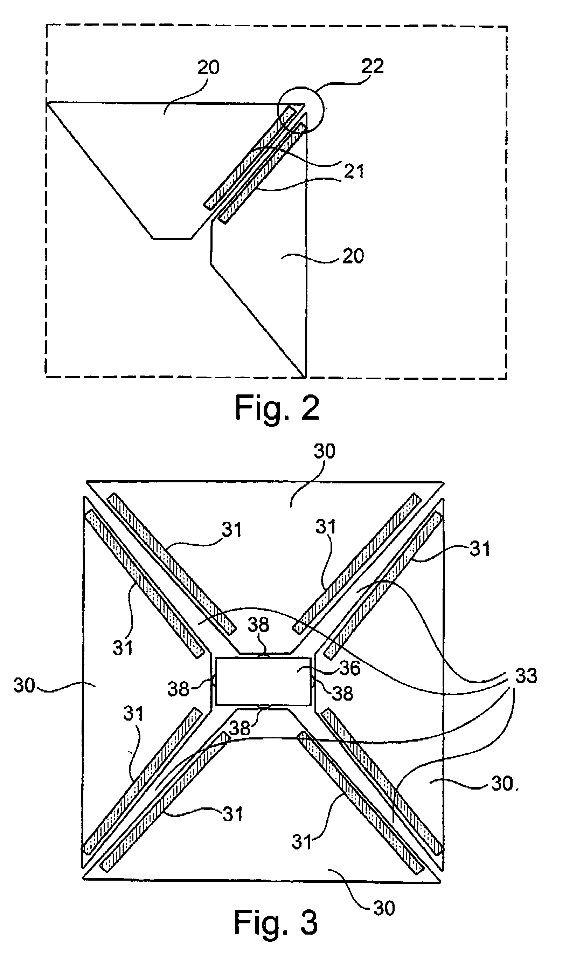

Figure 2 shows a schematic depiction of two partially overlapping views or images 20. In an edge region of the views 20 there may be positioned two image strips 21. The two image strips 21 may show at least partially a non overlapping area 22 and may lie adjacent to each other. The two image strips 20 may be formed by a plurality of pixels of the respective views 20. The views 20 may be generated by using a camera including wide angle optics.

Figure 3 shows a schematic depiction for a four-camera set-up 38 on a car 36. The four cameras 38 may be fixed to a front side, a right side, a rear side and a left side of the car 36. Due to the wide angle optics of the four cameras 38 four views 30 may supply information from visible objects around the car 36. Each of the four views or images 30 may have two images strips 31 in a boundary area adjacent to the views 30 on the left and on the right. A pair of images strips 30 may lie on edges between two neighbouring views 30, respectively. The image strips 30 of one edge or edge region may show an at least partially non overlapping area.

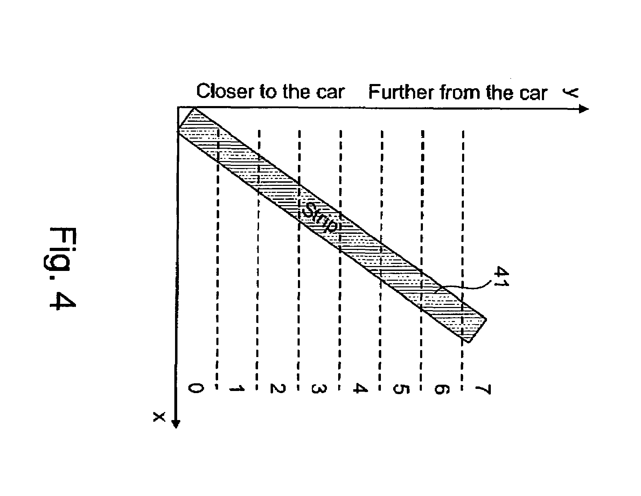

Figure 4 shows a schematic depiction for a strip 41 divided into spatial subdivisions. There may be eight spatial subdivisions. The spatial subdivisions may be listed by numbers 0 to 7. The cipher or numeral 0 may stand for the spatial subdivision of the strip 41 which may be the closest to the car or the lowest portion which is typically closest to the car since the car moves on the ground. Sequentially each larger cipher may stand for a spatial subdivision of the strip 41 which is farther from the car or may represent a higher portion of the sky. Hence, the spatial subdivision characterized by the cipher 7 may be the farthest from the car.

In the following a specific embodiment is described in order to explain the use of the method in detail without restricting the principles of the method or the scope of the claims.

The method of determining an average colour value of pixels may also be called in a specific embodiment a histogram-based colour correction for seamless stitching of wrap-around.

The next generation of cars is embedding and will embed multi-camera setups. Birdview generation is among the set of potential applications brought by this new paradigm, i.e. the generation of a view of a car as though it was viewed by a bird stationed right above it. In most systems, colour and exposure control runs independently on each camera, leading to mismatch when an application tries to stitch together the different views or images. Such a mismatch is potentially very distracting to the driver and could hamper the safety of a birdview-based parking assistance application. The purpose of the specific embodiment described in the following is to compensate these visual disparities in an efficient, cost effective way, bringing an enhanced, artefact-free experience to the driver of the car, by performing localized histogram/texture study at interview stitching points. This specific embodiment may bring an important enhancement to the birdview application.

Current trend in automotive equipment is to always bring more advanced driving assistance systems in the car. Within this way of thinking on-board cameras, pointing in or out of the vehicle, have become ubiquitous devices, be it for passenger watching, lane tracking, beam control or blind spot control (to name only a few). Several car manufacturers propose multi-camera systems to generate a "wrap-around" view of the car, primarily to serve the parking assistance. This kind of application is referred to as "birdview" or "Bird's Eye View".

As seen in Figure 3, four cameras 38 are mounted on the car 36: one on the front bumper pointing forward, one on the rear bumper pointing backward and two located on the side mirror pointing outwards. Each of these four cameras 38 has wide angle (FishEye) optics enabling to cover the entire ground area surrounding the car 36. The output of the four views 30 is transformed and projected to be converted as a view of the car 36 as seen from above. Finally the four views 30 are merged into a single one, generally including an overlay of a graphical model of the car 36.

A chip maybe able to process and analyze several video camera sources, while handling the final display phase. Effort in the development of a birdview application may lead to a deployment of differentiating features that enhance the final visualization and helps to cope with the problem of using several independent cameras 38 to generate one single image.

Conventional cameras and most of the ones currency used in the automotive domain arc based on linear sensor with limited dynamic range that, contrary to logarithmic cameras, heavily rely upon automatic exposure control to deal with highly varying lighting conditions, ranging from situations close to night vision to full summer sun light. Similarly, white balance may also need to be set-up in a way that is highly dependent on the camera environment and the shot conditions. Exposure and white balance control are steps that are specific to each camera, and in a conventional birdview camera set-up, each of the four cameras 38 are likely to experience very different exposure conditions resulting in varying level of contrast, saturation or tint. This may lead to particularly noticeable discontinuities in the final birdview image, since objects that appear in neighbouring views 20 are likely to appear with two potentially very different aspects. Such issues have already been accounted for in the field of panorama from still pictures generation (also known as mosaicking), multi-view video coding, or illumination compensation for single video coding. Even if the application contexts differ a lot, it is always a matter of bringing two pictures of different lighting characteristics to a common similar context.

Most algorithms rely on two relatively intricate phases: correction parameters estimation and colour compensation. Since the estimation phase is often deeply depending on the compensation model, we will try by a short overview of the two most common compensation methods describing the background of the specific embodiment The most common method of compensation is the following one (the right hand case in figure 1): to align two views, each pixels undergoes the same affine transform, which means that an offset $Shift_{Color}$ and a gain $Gain_{Color}$, specific to the chromatic component colour is applied to each component $Val_{Color}$ of each pixel to generate the compensated pixel component value $Val^{Comp}_{Color}$:

$$Val_{Color}^{Comp} = Gain_{Color} \cdot Val_{Color} + Shift_{Color}$$

A compensation process is applied to each of the neighbour views so that the two compensated views reach a comparable luminance level. This is a global process, which means that it acts as an a posteriori correction of the exposure parameters of the cameras. In the mosaicking case, neighbouring views often have a significant overlap area, and a standard way to deal with it is to perform pixel blending (left hand side of figure 1). For each pixel of the overlap area, we have $Val^1_{Color}$ the corresponding pixel value of the view 1 and $Val^2_{Color}$ the pixel value of view 2, the final value of the corresponding pixel in the overlap $Val^{Overlap}_{Color}$ is defined by :

$$Val_{Color}^{Overlap} = (1 - \alpha_{Pixel}) \cdot Val_{Color}^{1} + \alpha_{Pixel} \cdot Val_{Color}^{2}$$

where blending coefficient $\alpha_{pixel}$ is a potentially pixel-dependent, so as to produce a graceful transition over the full overlap area. This is a local process, which means the generated transitions are here mostly to avoid visually disturbing discontinuities, but would not generate "natural" images. However, blending definitely requires a rather large overlap area to enable a smooth view-to-view transition, that is remarkably nicer that the original discontinuity. This assumption is often not suitable to the birdview use case, since the field of view of each camera is being largely stretched to allow full wrap around, and the inter-view overlap areas being often irregular (narrow at their base, wide at their top). Moreover, in the case where views are stitched around small (from the screen point of view) object (e.g. a car model), discontinuities are more visible- circular case - than in the panorama -the linear case. Finally, the blending or smooth blending is often a rather expensive operation especially if relying on embedded software implementation. Most used parameter estimation algorithms for illumination compensation are a so called complex model (e.g. Tensor field), which is computation intensive (e.g. estimation of all possible parameters, on all image pixels and compare against a pre-selected quality measure). Since both subroutines arc not suitable for embedded core use cases, an overall approach which assumes that almost the entire view is the overlap area, or more generally approaches that assume that there is a significant overlap area have been tried. This is not the case in the described birdview generation application.

Moreover, most methods do not take the temporal aspects into account either. There is a need for a fast, simple, time consistent method for exposition correction that deals with almost non-existent overlap area.

The specific embodiment proposes a fast way of dealing with exposure discrepancies in birdview - or circular panoramas with limited overlap — i.e. when measurements can be mostly based on immediate neighbouring area, not common areas. Figure 2 shows the typical configuration between two adjacent views 20.

It derives descriptors, e.g. average colour välue, peak bin, mean colour value etc., from local analysis of histograms at each of the four inter-view boundary regions. A consistency measure is derived that may help to determine the potential problematic cases. Based on these descriptors, correction parameters are derived that may provide the best compensation trade-off required to generate a "discontinuity-free" birdview. Prior the final colour compensation phase, temporal filtering may be also applied to avoid overall temporal discontinuity that arc equally (if not more) annoying as the spatial ones.

In the following, NumView is the total number of views used to generate the birdview. Views are numbered from 0 to NumView-1, starting at the Top view and rotating clockwise. When referring to edge *k*, the reference is to the right edge of view *k* (or identically to the left edge of view ((k+l)%NumView).

When dealing with a pixel Pix, the notation X(Pix) is used to refer to the value of the *X* colour component of:Pix.

As shown in Figure 4, a strip of pixels 31 (a rectangular area of pixels at the boundary of the view 30) is considered at each side of each view, accounting to eight strips 31 in the most common case. They will serve as basis to estimate the colour/luminance distribution at the boundaries of views. For each of these strips a colour histogram is generated over a subset of the pixels (an application dependent percentage). A separate histogram is generated for each of the colour components (one for R, G, and B or one for Luminance and two for chrominance—depending on the selected colour space) — this may be used to handle not only the matter of exposure harmonization but also the harmonization of tint.

The algorithm works in three phases: strip histogram processing, discontinuity analysis, temporal filtering and final pixel compensation.

The histogram processing phase is performed on the four inter-view edges (of course the total number of edges is completely dependent on the number of views). Each inter-view edge (as shown in Figure 2) is the combination of two pixel strips 21. The different steps described hereafter are performed on both strips 21, before moving to the next edge.

A histogram computation may be performed by the following operations that are performed on each strip 31 as presented on figure 3. It may be noted that this would be performed similarly if the number of views were different. One only needs to consider boundary strips. For the sake of clarity, the colour space would be assumed to be R, G, B, with a special focus on R. We would work similarly with the YUV luminance-chrominance system, or when focusing on a different colour component. The idea is that we have 3 colour components of which one is the "predominant" one. The main goal of this phase is to determine the most relevant colour of the strip, in order to perform continuity assessment.

First, coarse histograms of R,G and B (histoR, histoG and histoB) are generated. In a non-limitative way, 8 bins are chosen to collect the 8-bit colour values. This gives, for each i between 0 and 7:

$$histoX(i) = Card\left\{ Pixel \in Strip / \frac{(X(Pixel))}{32} = i \right\}$$

where $X$ is either R, G, or B.

Simultaneously, correspondence histograms between R and G, resp. between R and B (histoR2G, resp. histoR2B) are derived. These histograms give the average value of G and B for pixels matching a given R value — assuming this value is present (histoR $(i) \neq 0$).

$$histoR2X(i) = \frac{\sum_{R(Pixel)=i} \frac{(X(Pixel))}{32}}{histoR(i)}$$

where $X$ is either G or B.

This characterization of the histogram is also coupled with a spatial component: the average position peak pos corresponding to each non-empty bin is also computed. This position is computed relative to the strip size range (Strip_Pos_Range), and stored as a percentage. Only the vertical position is considered:

$$peak\_pos(i) = \frac{\sum_{R(Pixel)=i}(Pos(Pixel)) \cdot 100}{histoR(i) \cdot Strip\_Pos\_Range}$$

Once these three types of objects are defined, it is tried to determine the predominant colour in the strip by performing a so called histogram peak selection to find a peak biri or peak.

A peak will be defined as follow:

1. It's an R histogram bin that contains more pixels than *PEAK_THRESHOLD* percent of the strip size.
2. The G and B histogram bins corresponding to the R peak are also a peak (i.e. contain more pixels than *PEAK_THRESHOLD* percent of the strip size).

This translates to:

$$\begin{cases} histoR(i) \geq PEAK\_THRESHOLD \cdot (Strip\_Pos\_Range \cdot Strip\_Width) \\ histoG(histoR2G(i)) \geq PEAK\_THRESHOLD \cdot (Strip\_Pos\_Range \cdot Strip\_Width) \\ histoB(histoR2B(i)) \geq PEAK\_THRESHOLD \cdot (Strip\_Pos\_Range \cdot Strip\_Width) \end{cases}$$

{hisloG(histoR2G (i)) ≥ PEAK_THRESHOLD- (Strip _Pos_Range_ strip_Width) {histoB(histoR2B(i)) ≥ PEAK_ TRESH0LD. (Strip_Pos_ Range_ Strip_ Width)
wherein each of the inequations has to be fulfilled.

There is no notion of order regarding histogram bin counts: as far as the value is high enough, a peak or peak bin is defined. The final peak bin selection is based on position: pixels located close to the car (i.e. with low average position) are favoured, and a peak with lower average position would hence be considered better than one located further from the car.

The process may be iterated according to a subroutine which may be described by the following pseudo code:

Threshold Loop
For a given PEAK_THRESHOLD value,
Histogram Loop
Initialize the peak with value 0, with infinite position.
For each i in the range of histogram bins,

    1. determine if *i* is a histogram peak, as defined above
    2. If it is a peak, compare its average position with the position of the previously determined peak. If it is closer to the car, keep it

If at the end of the loop, a peak or peak bin has been found, get out of the Threshold Loop.
Else decrease the PEAK_THRESHOLD value and start the Histogram Loop again.

This first phase was based on coarse quantization of the colour dynamics (i.e. into only 8 bins, starting from 256). Another study may then be performed to provide a finer and more representative average colour value which study maybe called Peak Characteristics Refinements. The strip is scanned again, and pixels that fall relatively close to the predetermined peak bin "Peak" are aggregated. A pixel Pixel is considered relevant if:

$$\left| X(Pixel) - X(Peak) \right| < PEAK\_DEVIATION$$

where $X$ is R, G or B and PEAK_DEVIATION is an application dependent tolerance parameter.

From these peak pixels a mean colour value may be derived

$$\left\{ \mu_X^{k,Side} \right\} \begin{array}{l} X = R, G, B \\ Side = left\ or\ right \\ k = edge\ identifier \end{array}$$

($X$ being R G or B), defined by :

$$\mu_X^{k,Side} = \frac{\sum_{PeakPixels\ of\ the\ Side\ strip\ of\ view\ k} X(PeakPixel)}{\text{Number of } PeakPixels}$$

Index $k$ is the identifier of the view and Side and describes if the Left of Right strip of view k is considered. The values of this mean are now fully within the 0-255 range, and no longer in the quantized 8 bin histogram scale. It will be used to compare the "absolute" value of neighbouring strips. A descriptor of the spatial distribution of this peak within the strip is computed. The strip is decomposed into STRIP_SLICE_NUM (here 8) contiguous zone of equal size as shown in figure 4.

The mean colour value is not a sufficient indicator for cross-edge comparison, so it might be advantageous to make sure that the pixels involved in the construction of the peak are distributed (more or less) equally on both side of an edge. For each vertical subdivision i of a strip, we compute the-Cumul(i) value that counts the number of the pixels involved in the peak bin or peak coming from this very subdivision. The Cumul array is used to define a sampling binary mask Sampling, which would be used to compare efficiently the distribution between strips at each side of an edge. Sampling is defined as follows:

$$\begin{cases} Sampling(i) = 1 \text{ if } Cumul(i) > \left(\dfrac{StripSize}{STRIP\_SLICE\_NUM}\right) \cdot MinimumSamplingSizeRatio \\ Sampling(i) = 0 \text{ otherwise} \end{cases}$$

where MinimumSamplingSizeRatio is the minimum size ratio which the number of peak pixels must reach in a subdivision in order for this subdivision to be considered relevant The same notation is used for sampling mask as for mean value: $Sampling^k_{side}$ represents the sampling mask of the strip located on the Side of view $k$. with Side being either Left or Right. Consequently the left strip of edge $k$ is the right strip of view $k$ and the right strip of edge $k$ is the left strip of view (($k$+1) %NumView)).

In the course of the algorithm, when considering an edge, first a histogram analysis is performed on the left strip of this edge. When the right strip is processed, the first steps are the same (Histogram Computation, Peak Selection, Peak refinement), however an edge consistency check may be performed before moving on to the next edge which may be called strip sampling quality check. Since the measures performed on the edge strips will be the base for global exposure compensation, it may be advantageous to make sure that they are reliable enough. The continuity hypothesis tells that, if the example of Figure 2 is taken, the strip on View 1 is supposed to have similar characteristics as the strip on View 2. This means: comparable overall and spatial colour distributions. Since the colour comparison is based on the most reliable histogram peak on each side, if their spatial colour distributions do not match, it may be switched to the next peak, in order to find a more consistent match. Consistency is defined according to the sampling mask on each side of edge k, $Sampling^{(K+1)\%NumView}$ and $Sampling^K_{Right}$.

A peak configuration is accepted if the following conditions are fulfilled:

$$\begin{cases} \text{Num } \{i \text{ such that } Sampling^{(k+1)\%NumView}_{Left}(i) = 1 \text{ AND } Sampling^{k}_{Right}(i) = 1\} > STRIP\_SLICE\_NUM \cdot AccRatio \\ \text{Num } \{i \text{ such that } Sampling^{(k+1)\%NumView}_{Left}(i) \neq Sampling^{k}_{Right}(i)\} \leq STRIP\_SLICE\_NUM \cdot DiffRatio \end{cases}$$

AccRatio and DiffRatio may define the required ratio of vertical subdivision in common between the two strip peaks and the maximum ratio of vertical subdivision, respectively, which are not common to both strip peaks.

If any of the above constraints is not met, it is stepped back to the Peak detection step for the right strip, excluding the value that had been selected as a peak or peak bin candidate.

At this point of the algorithm for each view $k$ and each side -left or right-, a mean peak value is determined,

$$\left\{ \mu^{k,Side}_X \right\}_{\substack{X=R,G,B \\ Side=left \text{ or } right}}$$

supposedly representative of the boundary areas between the views. To determine the compensation parameters, the discontinuity level between images is determined. For each edge k and each colour component $X$, the shift parameter $EdgeShift^X_k$ is computed defined as:

$$EdgeShift^X_k = \mu^{(k+1)\%NumView,Left}_X - \mu^{k,Right}_X$$

in the ideal case, a cyclic configuration is given so that:

$$\mu^{k,Left}_X = \mu^{k,Right}_X$$

is true, leading easily to

$$\sum_{k=0}^{NumView-1} EdgeShift_k^X = 0$$

In the real case this hypothesis may not be completely fulfilled and an error correction is distributed over the edges to achieve this.

The error distribution will be based on edge discontinuity analysis, from sampling and colour value

A discontinuity may be given by a sampling discontinuity or by a colour discontinuity.

The sampling discontinuity is detected at an edge k if the following conditions are fulfilled:

$$\begin{cases} Num\left\{i \text{ such that } Sampling_{Left}^{(k+1)\%NumView}(i) = 1 \text{ AND } Sampling_{Right}^{k}(i) = 1\right\} \leq STRIP\_SLICE\_NUM \cdot AccRati \\ Num\left\{i \text{ such that } Sampling_{Left}^{(k+1)\%NumView}(i) \neq Sampling_{Right}^{k}(i)\right\} \geq STRIP\_SLICE\_NUM \cdot DiffRatio \end{cases}$$

or

$$\left\{Num\left\{i \text{ such that } Sampling_{Left}^{(k+1)\%NumView}(i) = 1 \text{ AND } Sampling_{Right}^{k}(i) = 1\right\} \leq STRIP\_SLICE\_NUM \cdot MinRatio\right.$$

This means that the two strips are either too different (not enough subdivision in common and two many different ones) or they simply do not have enough subdivisions in common, meaning the correspondence is not reliable enough and a discontinuity is very likely.

If the continuity hypothesis is really broken, the method may rely on local edge shifts to find discontinuity edges, referring now to the colour discontinuity.

A breach in the continuity hypothesis is given by:

$$\sum_{X=R,G,B} \left| \sum_{k=0}^{NumView-1} EdgeShift_k^X \right| > BirdviewDiscontinuityThresh$$

where BirdviewDiscontinuityThresh is an empirically determined overall continuity threshold.

Local edge shift discontinuity is given at an edge *k* by:

$$\sum_{X=R,G,B} \left| EdgeShift_k^X \right| > EdgeDiscontinuityThresh$$

where EdgeDiscontinuityThresh is an empirically determined local continuity threshold.

If no edge presents a colour discontinuity, the edge that would support the overall discontinuity redistribution is "artificially" determined. In particular, the one with the lowest sampling match is selected, that is k such that:

$$Num\left\{i \text{ such that } Sampling_{Left}^{(k+1)\%NumView}(i) = 1 \text{ AND } Sampling_{Right}^{k}(i) = 1\right\}$$

is minimal.

A discontinuity redistribution is performed as follows.

The overall discontinuity on the edges is determined while favouring: the edges with the larger edge shift. This means the EdgeShift parameters are changed in the following way, if the EdgeShift parameters are non-zero:

$$EdgeShift_k^X = EdgeShift_k^X - \frac{\left|EdgeShift_k^X\right| \cdot \sum\limits_{i=0}^{NumEdges-1} EdgeShift_i^X}{\sum\limits_{i=0}^{NumEdges-1} \left|EdgeShift_i^X\right|}$$

for all colour components X.

One can see that if the continuity hypothesis is fulfilled for the *X* colour component, the EdgeShift parameter of the *X* colour component will be unchanged.

A specific case is used when only one edge shows a discontinuity. For example the only discontinuity edge is assigned the overall discontinuity weight - which proved to be statistically more efficient than applying the generic redistribution process. In this case, if k is the only discontinuity edge, the following is applied:

$$EdgeShift_k^X = - \sum\limits_{i=0, i \neq k}^{NumEdges-1} EdgeShift_i^X$$

for all colour component X.

At this stage of the algorithm, edge shifts have been redistributed in a way that may ensure that the continuity hypothesis is respected. In this final phase the focus is now no longer on edges but on views. The goal is to find a set of colour shift parameters

$$\left\{Shift_{ViewIdx}^X\right\}_{ViewIdx=0..NumView-1}^{X=R,G,B}$$

which will be applied to all pixels of each view in order to reduce the colour disparity between views. The respective method may be notated as compensation parameters definition.

Since it is only dealt with edge samples, parameters may be found that reduce the EdgeShift values. To proceed, the views are sorted according to their edge shift variance. Indeed, the larger the variance, the more disparity may be present between two edges. For a given view *k* the edge shift of its right edge is $EdgeShift_k^X$, and the edge shift of its left edge *is* $EdgeShift_{(k-1)\%Num\,View}^X$. Since the EdgeShift variables are defined from left to right, in order to have comparable value between the left and the right edge, the opposite to the left edge shift may be used, to make sure the difference is always computed from the current view. Therefore the average edge shift $AvgEdgeShift_K^X$ for view k is defined **by:**

$$AvgEdgeShift_k^X = \frac{\left(EdgeShift_k^X - EdgeShift_{(k-1)\%NumView}^X\right)}{2}$$

Consequently, the edge shift variance $EdgeShiftVar_K^X$ for view k is defined by:

$$EdgeShiftVar_k =$$

$$\left( \sum_{X=R,G,B} \frac{(EdgeShift_k^X - AvgEdgeShift_k^X)^2 + (-EdgeShift_{(k-1)\%NumView}^X - AvgEdgeShift_k^X)^2}{2} \right)$$
$$\overline{\hspace{6cm} 3 \hspace{6cm}}$$

Which in the end means:

$$EdgeShiftVar_k^X = \frac{\displaystyle\sum_{X=R,G,B} \frac{\left(EdgeShift_k^X + EdgeShift_{(k-1)}^X\right)^2}{4}}{3}$$

The final parameter setting algorithm may be described by the following pseudo code: Compute Edge Shift Variance for each view

Loop on the View, by decreasing edge shift variance order:

Current view is view k:

    1. Compute $AvgEdgeShiftf_k^X$ for each $X$ in $R$, G, $B$.
    2. Assign $AvgEdgeShift_k^X$ to $Shift_k^X$ for each $X$ in $R, G, B$.
    3. $Shift_k^X$ is clipped within acceptable limits that are application dependent
    4. Update the *EdgeShift* parameters accordingly:

    $EdgeShift_k^X = EdgeShift_k^X - Shift_k^X$
    $EdgeShift_{(k-1)\%}^X = EdgeShift_{(k-1)\%}^X + Shift_k^X$

Finally, since video images and not just a still image are used, also some level of temporal consistency has to be ensured. Two types of filtering are performed both representing temporal filltering:

1. Discontinuity level

At an edge that presents a spike discontinuity, the measure is likely to have been disturbed by noise, obstacle, anything present at the inter-view boundary. To smooth out the potential irregularity, the $Shift_k^X$ parameter is filtered (averaging window) with the previous shift values. If $AvgShi_k^X(t)$ is the average $Shifc_k^X$ value at time t, its value is given by:

$$AvgShift_k^X(t) = \frac{((DiscontFilterWindowSize - 1) \cdot AvgShift_k^X(t-1)) + Shift_k^X}{DiscontFilterWindowSize}$$

where DiscontFilterWindowSize is the size of the sliding window.
Otherwise, the average shift is simply assigned the current shift value. Finally at frame t:

$$Shift_k^X = AvgShift_k^X(t)$$

2, Overall Filtering

In order to avoid some overall-flashing effect, special care is also taken to guarantee no great change occurs on a frame to frame basis. A smoothing is performed on the mean shift and reported back to the specific shift parameters.

The mean shift is defined by:

$$MeanShift^X = \frac{1}{NumView} \sum_{View} Shift^X_{View}$$

In similar fashion to what was done for discontinuity level temporal filtering, if $AvgMeanShift^X(t)$ is the average $MeanShift^X(t)$ value at time t, its value is given by:

$$AvgMeanShift^X(t) = \frac{((OverallFilterWindowSize - 1) \cdot AvgMeanShift^X(t-1)) + MeanShift^X}{OverallFilterWindowSize}$$

At time t, the shift parameters are updated using the mean shift increment So for each view k.

$$Shift^X_k = Shift^X_k - (MeanShift^X - AvgMeanShift^X_k(t))$$

is performed.

Finally pixel compensation is performed in order to .complete the described method. Once every shift parameters have computed and, if required, temporally filtered, they are applied to every pixel of the final birdview, using the following operations:

For each pixel Pixk of view k

1. $X(Pix_k) = X(pix_k) + Shift^X_k$
2. Clipping $X(Pix_k)$ between the acceptable values for the **X** color component.

is performed

The disclosed specific embodiment may be applied to any application involving stitching of views (panorama, in car birdview generation for parking assistance or vehicle overall monitoring) in a resource limited environment (e.g. embedded software, embedded system). It may be especially suited to improve the visual quality of the birdview application

It should be noted that the term "comprising" does not exclude other elements or steps and "a" or "an" docs not exclude a plurality. Also elements described in association with different embodiments may be combined. It should also be noted that reference signs in the claims should not be construed as limiting the scope of the claims.

**Claims**

1. A method of determining a number of pixels out of a plurality of pixels, which plurality of pixels forms an image strip, each pixel of the plurality of pixels having a. specific colour component value, the method comprising:

determining a value of a first colour component of each pixel of the plurality of pixels wherein the value corresponds to a first colour depth describable by a first number of bits,
binning the plurality of pixels into a second number of bins of a first histogram,
wherein the second number is lower than a maximum value represented by the first number of bits,
determining the number of entries in each bin of the first histogram and
determining for each bin of the first histogram an average colour value of a second colour component of the pixels binned into the respective bin.

2. The method according to claim 1, further comprising:

defining an associated neighbourhood for each average colour value wherein each associated neighbourhood defines one associated bin of a second plurality of bins, and
determining for each associated bin of the second plurality of bins the number of pixels having a value of the second colour component lying in the respective associated bin.

3. The method according to claim 2, further comprising:

determining one peak bin representing a colour value, by selecting the bin of the first histogram and of the respective associated bin of the second plurality of bins which has a higher number of entries than a given threshold.

4. The method according to claim 3, further comprising
dividing the image strip into a plurality of spatial subdivisions wherein each pixel of the image strip is sorted into one of the plurality of spatial subdivisions depending on its distance to one end of the image strip,

5. Method of matching two image strips, the method comprises:

performing a method according to claim 4 for the first image strip,
performing a method according to claim 4 for the second image strip,
determining a first number of accordance pairs of spatial subdivision of the first image strip and the second image strip, wherein an accordance pair of spatial subdivision is defined by that the spatial subdivision of thc first strip and the corresponding spatial subdivision of the second image strip is a valid spatial subdivision, and
determining a second number of difference pairs of spatial subdivisions of the first image strip and the second image strip, wherein a difference pair of spatial subdivision is defined by that exactly one of the spatial subdivision of the first strip and the corresponding spatial subdivision of the second image strip is a valid spatial subdivision.

6. The method according to claim 5, further comprising:

determining whether the first number of accordance pairs is above a first predetermined threshold and whether the second number of difference pairs is below or equals a second predetermined threshold, and
in case both of the above determining steps are fulfilled allocate the value TRUE to a continuity parameter.

7. The Method according to claim 5, further comprising:

determining whether the first number of accordance pairs is below or equals a third predetermined threshold and whether the second number of difference pairs is above or equals a fourth predetermined threshold, and
in case of that at least one of the above determining steps is fulfilled allocate the value TRUE to a sampling discontinuity parameter.

8. The method according to claim 5, further comprising
determining a mean colour value for one of the two colour components of the first image strip by:

determining an average colour value of the peak bin for the respective colour component, and
determining the mean colour value of the pixels having a colour value of the respective colour component which lie within a. colour deviation zone around the determined average colour value while applying a second colour depth to the colour values, which second colour depth is descrihahle by a number of bits being higher than the number of bits for describing the average colour value.

9. The method according to claim 8, further comprising
determining a further mean colour value for the one of the two colour components for the second image strip, and
calculating an $EdgeShift^X_k$ , wherein $EdgeShift^X_k$ is calculated by subtracting the mean colour value of a first image strip from the mean colour value of the second image strip.

10. The method according to claim 9, further comprising

a) determining the value of an overall colour discontinuity parameter, wherein the overall colour discontinuity parameter is allocated the value TRUE in case:

when, for a number of NumView views

$$\sum_{X-R,G,B} \left| \sum_{k=0}^{NumView-1} EdgeShift_k^X \right| > BirdviewDiscontinuityThreshold$$

for a predetermined BirdviewDiscontinuityThreshold

b) determining, when the overall colour discontinuity parameter is allocated the value TRUE, the value of a local colour discontinuity parameter, wherein for each view k of a number of NumView view the value of local colour discontinuity parameter is allocated the value TRUE in case

$$\sum_{X=R,G,B} \left| EdgeShift_k^X \right| > EdgeDiscontinuityThreshold$$

for a predetermined EdgeDiscontinuityThreshold,
and/or
c) performing a discontinuity redistribution,
wherein the discontinuity redistribution is, for each colour component X, given by:

$$i) \quad EdgeShift'{}_k^X = - \sum_{i=0,i\neq k}^{NumEdges-1} EdgeShift_k^X \, ,$$

in case for exactly one edge k the sampling discontinuity parameter is TRUE and/or the local colour discontinuity parameter is TRUE,

$$ii) \quad EdgeShift'{}_k^X = EdgeShift_k^X - \frac{\left| EdgeShift_k^X \right| \cdot \sum_{i=0}^{NumEdges-1} EdgeShift_k^X}{\sum_{i=0}^{NumEdges-1} \left| EdgeShift_k^X \right|}$$

in case for more than one edge k the sampling discontinuity parameter is TRUE and/or the local colour discontinuity parameter is TRUE,

$$iii) \quad EdgeShift'{}_k^X = - \sum_{i=0,i\neq k}^{NumEdges-1} EdgeShift_k^X$$

in case for no edge the colour discontinuity parameter is TRUE, redistribution being applied to one single edge k.

**11.** The method according to claim 10, further comprising
determining $EdgeShift_k^X$ as $EdgeShift'{}_k^X$
determining $Shift_k^X$ as $AvgEdgeShift_k^X$ wherein

$$AvgEdgeShift_k^X \text{ is given by } AvgEdgeShift_k^X = \frac{\left(EdgeShift_k^X - EdgeShift_{(k-1)}^X\right)}{2}$$

for each colour component *X* and/or for each edge *k*

12. The method according to claim 11, further comprising
redetermining *Shift* as $AvgShift^X{}_k$ wherein $AvgShift^X{}_K$ is given) by

$$AvgShift_k^X = \frac{((DiscontFilterWindowSize - 1) \cdot AvgShift_k^X(t-1)) + Shift_k^X}{DiscontFilterWindowSize},$$

for each colour component *X* and/or for each edge *k*, wherein *DiscontFillerWindowSize* is a number of temporal refences in a sliding window.

13. The method according to claim 12, further comprising
calculating $Shift^X{}_k$ from $AvgShiftk^X{}_k$, $MeanShift^X$ and $AvgMeanShift)^X(t)$ by $Shift = AvgShift^X{}_k - (MeanShift^X - AvgMeanShift^X(t)$,
wherein

$$MeanShift^X = \frac{1}{NumView} \sum_{View} Shift_k^X, \text{ for each colour component } X$$

and

$$AvgMeanShift^X(t) = \frac{((OverallFilterWindowSize - 1) \cdot AvgMeanShift^X(t-1)) + MeanShift^X}{OverallFilterWindowSize}$$

for each color component and wherein OveralFilterWindowSize is a total size of the filter window.

14. The method according to claim 13, further comprising
calculating for each Pixel

$$X'(Pix_k^X) = X(Pix_k^X) + Shift_k^X$$

for each colour component *X* and/or for each edge *k*.

15. System for determining a number of pixels out of a plurality of pixels, which plurality of pixels forms an image strip, each pixel of the plurality of pixels having a specific colour component value, the system comprising:

an image chip device adapted to determine a value of a first colour component of each pixel of the plurality of pixels wherein the value corresponds to a first colour depth describable by a first number of bits,
a storage device adapted to binning the plurality of pixels into a second number of bins of a first histogram, wherein the second number is lower than a maximum value represented by the first number of bits,
a processor device adapted to determine the number of entries in each bin of the first histogram and the processor device being adapted to determine for each bin of the first histogram an average colour value of a second colour component of the pixels binned into the respective bin.

**Amended claims in accordance with Rule 137(2) EPC.**

**1.** A method of determining an average colour value assigned to a number of pixels out of a plurality of pixels, which plurality of pixels forms an image strip (31, 41), each pixel of the plurality of pixels having a specific colour component value, the method comprising:

determining a value of a first colour component of each pixel of the plurality of pixels wherein the value corresponds to a first colour depth describable by a first number of bits,
binning the plurality of pixels into a second number of bins of a first histogram,
wherein the second number is lower than a maximum value represented by the first number of bits,
determining the number of entries in each bin of the first histogram and
determining for each bin of the first histogram an average colour value of a second colour component of the pixels binned into the respective bin.

**2.** The method according to claim 1, further comprising:

defining an associated neighbourhood for each average colour value wherein each associated neighbourhood defines one associated bin of a second plurality of bins, and
determining for each associated bin of the second plurality of bins the number of pixels having a value of the second colour component lying in the respective associated bin.

**3.** The method according to claim 2, further comprising:

determining one peak bin representing a colour value, by selecting the bin of the first histogram and of the respective associated bin of the second plurality of bins which has a higher number of entries than a given threshold.

**4.** The method to claim 3, further comprising
dividing the image strip into a plurality of spatial subdivisions wherein each pixel of the image strip is sorted into one of the plurality of spatial subdivisions depending on its distance to one end of the image strip,

**5.** Method of matching two image strips, the method comprises:

performing a method according to claim 4 for the first image strip,
performing a method according to claim 4 for the second image strip,
determining a first number of accordance pairs of spatial subdivisions of the first image strip and the second image strip, wherein an accordance pair of spatial subdivision is defined by that the spatial subdivision of the first strip and the corresponding spatial subdivision of the second image strip is a relevant spatial subdivision, and
determining a second number of difference pairs of spatial subdivisions of the first image strip and the second image strip, wherein a difference pair of spatial subdivision is defined by that exactly one of the spatial subdivision of the first strip and the corresponding spatial subdivision of the second image strip is a relevant spatial subdivision.

**6.** The method according to claim 5, further-comprising:

determining whether the first number of accordance pairs is above a first threshold and whether the second number of difference pairs is below or equals a second predetermined threshold, and
in both of the above determining steps are fulfilled allocate the value TRUE to a continuity parameter.

**7.** The Method according to claim 5, further comprising:

determining whether the first number of accordance pairs is below or equals a third predetermined threshold and whether the second number of difference pairs is above or equals a fourth predetermined threshold, and
in case of that at least one of the above determining steps is fulfilled allocate the value TRUE to a sampling discontinuity parameter.

**8.** The method according to claim 5, further comprising
determining a mean colour value for one of the two colour components of the first image strip by:

determining an average colour value of the peak bin for the respective colour component, and
determining the mean colour value of the pixels having a colour value of the respective colour component which lie within a colour deviation zone around the determined average colour value while applying a second colour depth to the colour values, which second colour depth is describable by a number of bits being higher than the number of bits for describing the average colour value.

**9.** The method according to claim 8, further comprising
determining a further mean colour value for the one of the two colour components for the second image strip, and

calculating an $EdgeShift_k^X$, wherein $EdgeShift_k^X$ is calculated by subtracting the mean colour value of a first image strip from the mean colour value of the second image strip.

**10.** The method according to claim 9, further comprising

a) determining the value of an overall colour discontinuity parameter, wherein the overall colour discontinuity parameter is allocated the value TRUE in case:
when, for a number of Num View views

$$\sum_{X=R,G,B} \left| \sum_{k=0}^{NumView-1} EdgeShift_k^X \right| > BirdviewDiscontinuityThreshold$$

for a predetermined BirdviewDiscontinuityThreshold
b) determining, when the overall colour discontinuity parameter is allocated the value TRUE, the value of a local colour discontinuity parameter, wherein for each view $k$ of a number of Num View view the value of local colour discontinuity parameter is allocated the value TRUE in case

$$\sum_{X=R,G,B} \left| EdgeShift_k^X \right| > EdgeDiscontinuityThreshold$$

for a predetermined EdgeDiscontinuityThreshold,
and/or
c) performing a discontinuity redistribution,
wherein the discontinuity redistribution is, for each colour component $X$, given by:

$$i)\ EdgeShift'^X_k = -\sum_{i=0, i \neq k}^{NumEdges-1} EdgeShift_k^X ,$$

in case for exactly one edge $k$ the sampling discontinuity parameter is TRUE and/or the local colour discontinuity parameter is TRUE,

$$ii)\ EdgeShift'^X_k = EdgeShift_k^X - \frac{\left| EdgeShift_k^X \right| \cdot \sum_{i=0}^{NumEdges-1} EdgeShift_k^X}{\sum_{i=0}^{NumEdges-1} \left| EdgeShift_k^X \right|}$$

in case for more than one edge $k$ the sampling discontinuity parameter is TRUE and/or the local colour discontinuity parameter is TRUE,

$$\text{iii) } EdgeShift'^{X}_{k} = -\sum_{i=0, i \neq k}^{NumEdges-1} EdgeShift^{X}_{k}$$

in case for no edge the colour discontinuity parameter is TRUE, redistribution being applied to one single edge *k*.

**11.** The method according to claim 10, further comprising

determining $EdgeShift^{X}_{k}$ as $EdgeShift'^{X}_{k}$,

determining $Shift^{X}_{k}$ as $AvgEdgeShift^{X}_{k}$ wherein

$$AvgEdgeShift^{X}_{k} \text{ is given by } AvgEdgeShift^{X}_{k} = \frac{\left(EdgeShift^{X}_{k} - EdgeShift^{X}_{(k-1)}\right)}{2}$$

for each colour component *X* and/or for each edge *k*.

**12.** The method according to claim 11, further comprising

redetermining $Shift^{X}_{k}$ as $AvgShift^{X}_{k}$ wherein $AvgShift^{X}_{k}$ is given by

$$AvgShift^{X}_{k} = \frac{((DiscontFilterWindowSize - 1) \cdot AvgShift^{X}_{k}(t-1)) + Shift^{X}_{k}}{DiscontFilterWindowSize},$$

for each colour component *X* and/or for each edge *k*, wherein *DiscontFilterWindowSize* is a number of references in a sliding window.

**13.** The method according to claim 12, further comprising

calculating $Shift^{X}_{k}$ from $AvgShift^{X}_{k}$, *MeanShift$^X$* and *AvgMeanShift$^X$* (*t*) by

$$Shift^{X}_{k} = AvgShift^{X}_{k} - (MeanShift^{X} - AvgMeanShift^{X}(t)),$$

wherein

$$MeanShift^{X} = \frac{1}{NumView}\sum_{View} Shift^{X}_{k}, \text{ for each colour component } X$$

and

$$AvgMeanShift^{X}(t) = \frac{((OverallFilterWindowSize - 1) \cdot AvgMeanShift^{X}(t-1)) + MeanShift^{X}}{OverallFilterWindowSize}$$

for each colour component and wherein OveralFilterWindowSize is a total size of the filter window.

**14.** The method according to claim 13, further comprising
calculating for each Pixel

$$X'(Pix_k^X) = X(Pix_k^X) + Shift_k^X$$

for each colour component *X* and/or for each edge *k*.

**15.** System for determining an average colour value assigned to a number of pixels out of a plurality of pixels, which plurality of pixels forms as image strip, each pixel of the plurality of pixels having a specific colour component value, the system comprising;
an image chip device adapted to determine a value of a first colour component of each pixel of the plurality of pixels wherein the value corresponds to a first colour depth describable by a first number of bits,
a storage device adapted to binning the plurality of pixels into a second number of bins of a first histogram, wherein the second number is lower than a maximum value represented by the first number of bits,
a processor device adapted to determine the number of entries in each bin of the first histogram and the processor device being adapted to determine for each bin of the first histogram an average colour value of a second colour component of the pixels binned into the respective bin.

Fig. 1

Fig. 2

Fig. 3

Fig. 4

Europäisches
Patentamt

European
Patent Office

Office européen
des brevets

# EUROPEAN SEARCH REPORT

**Application Number**

EP 09 29 0967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG M ET AL: "Fast color correction using principal regions mapping in different color spaces" REAL-TIME IMAGING, ACADEMIC PRESS LIMITED, GB LNKD- DOI:10.1016/J.RTI.2003.11.001, vol. 10, no. 1, 1 February 2004 (2004-02-01), pages 23-30, XP004502036 ISSN: 1077-2014 * abstract * * Section 2.4 * | 1-15 | INV. G06T3/40 G06T5/40 |
| A | HAN B ET AL: "A novel hybrid color registration algorithm for image stitching applications" IEEE TRANSACTIONS ON CONSUMER ELECTRONICS IEEE USA, vol. 52, no. 3, August 2006 (2006-08), pages 1129-1134, XP009132943 ISSN: 0098-3063 * abstract * * Section III * | 1-15 | |
| | | | TECHNICAL FIELDS SEARCHED (IPC) |
| | | | G06T |
| A | US 6 128 108 A (TEO PATRICK [US]) 3 October 2000 (2000-10-03) * abstract * * column 15, lines 30-42; figure 7c * | 1-15 | |
| A | EP 1 482 725 A2 (NIPPON KOGAKU KK [JP]) 1 December 2004 (2004-12-01) * paragraphs [0047] - [0049]; figure 3 * | 1-3 | |
| A | US 2003/026476 A1 (SHIIYAMA HIROTAKA [JP]) 6 February 2003 (2003-02-06) * abstract * | 1-3 | |

The present search report has been drawn up for all claims

| Place of search | Date of completion of the search | Examiner |
|---|---|---|
| Munich | 3 May 2010 | Kessler, Cordula |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

**ANNEX TO THE EUROPEAN SEARCH REPORT
ON EUROPEAN PATENT APPLICATION NO.** EP 09 29 0967

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2010

| Patent document cited in search report | | Publication date | Patent family member(s) | | Publication date |
|---|---|---|---|---|---|
| US 6128108 | A | 03-10-2000 | US | 6349153 B1 | 19-02-2002 |
| | | | US | 6385349 B1 | 07-05-2002 |
| EP 1482725 | A2 | 01-12-2004 | JP | 4269780 B2 | 27-05-2009 |
| | | | JP | 2004350222 A | 09-12-2004 |
| | | | US | 2004239774 A1 | 02-12-2004 |
| US 2003026476 | A1 | 06-02-2003 | JP | 4078085 B2 | 23-04-2008 |
| | | | JP | 2002358515 A | 13-12-2002 |

EPO FORM P0459

For more details about this annex : see Official Journal of the European Patent Office, No. 12/82